# EUROPEAN PATENT APPLICATION

(11) **EP 3 795 925 A1**
(43) Date of publication of application: **24.03.2021**
(21) Application number: 19802896.1
(22) Date of filing: 15.05.2019
(51) Int. Cl.: F25B 1/00, F04C 29/00, F25B 31/02

(54) **REFRIGERATION CYCLE DEVICE**

(30) Priority: 18.05.2018 JP 2018096360
(71) Applicant: DAIKIN INDUSTRIES, LTD., Osaka 530-8323 (JP)
(72) Inventor: MAEJIMA, Yukiko, Osaka 530-8323 (JP); TANAKA, Masaru, Osaka 530-8323 (JP)
(74) Representative: Conti, Marco
(86) International application number: PCT/JP2019/019323
(87) International publication number: WO 2019/221178

(57) **Abstract**

A refrigeration cycle apparatus (1) includes a refrigerant and a refrigeration cycle circuit. The refrigeration cycle circuit includes a compressor (10), and causes the refrigerant to circulate therethrough. The refrigerant is HFO-based refrigerant alone or a mixed refrigerant. In the mixed refrigerant, a mixing ratio of HFO-based refrigerant is equal to or more than 10% by weight. The compressor (10) includes a motor (30). The motor (30) includes a resin component. The resin component is made of PET, PA, or the like.

## Description

### TECHNICAL FIELD

A refrigeration cycle apparatus for use in, for example, a cooling operation or a heating operation.

### BACKGROUND ART

Patent Literature 1 (Japanese Patent No. 4,932,793) discloses a refrigeration cycle apparatus that adopts HFO-1234yf as a refrigerant.

### SUMMARY OF THE INVENTION

### <Technical Problem>

Some components for use in a refrigeration cycle apparatus may include a resin material. Some types of resin materials generate an acid by chemically reacting with a refrigerant. The acid thus generated may induce corrosion or degradation of such components.

### <Solutions to Problem>

A refrigeration cycle apparatus according to a first aspect includes a refrigerant and a refrigeration cycle circuit. The refrigeration cycle circuit includes a compressor, and causes the refrigerant to circulate therethrough. The refrigerant is HFO-based refrigerant alone or a mixed refrigerant. In the mixed refrigerant, a mixing ratio of HFO-based refrigerant is equal to or more than 10% by weight. The compressor includes a motor. The motor includes a first resin component. The first resin component is made of at least one of PET (polyethylene terephthalate), PA (polyamide), LCP (liquid crystal polymer), PBT (polyethylene terephthalate), phenol resin, melamine resin, PEEK (polyether ether ketone), PTFE (polytetrafluoroethylene), PAI (polyamideimide), PPS (polyphenylene sulfide), and PEN (polyethylene naphthalate).

According to this configuration, the motor includes the first resin component made of a resin other than PI (polyimide). Accordingly, the first resin component generates less amount of acid by reacting with the HFO-based refrigerant, compared with the case where the first resin component was made of PI. As a result, corrosion by the acid of the components in a refrigeration cycle system is restrained.

The refrigeration cycle apparatus according to a second aspect is the refrigeration cycle apparatus according to the first aspect, wherein a ratio of the first resin component to the refrigerant is equal to or more than 1.5% by weight.

According to this configuration, the ratio of the first resin component to the refrigerant is equal to or more than 1.5% by weight. This configuration therefore restrains acid generation since the first resin component with a larger amount is less likely to react with the HFO-based refrigerant.

The refrigeration cycle apparatus according to a third aspect is the refrigeration cycle apparatus according to the first or second aspect, further including a refrigerating machine oil and an acid scavenger. The refrigerating machine oil is retained in the compressor. The acid scavenger is added to the refrigerating machine oil. A ratio of the acid scavenger to the refrigerant is equal to or less than 1.6% by weight.

According to this configuration, the ratio of the acid scavenger to the refrigerant is equal to or less than 1.6% by weight. This configuration therefore restrains degradation in lubricity of the refrigerating machine oil owing to the acid scavenger.

The refrigeration cycle apparatus according to a fourth aspect is the refrigeration cycle apparatus according to any one of the first to third aspects, wherein the first resin component is at least one selected from an insulator, an insulating sleeve, a binding cord, a cluster block, a covering of a connection line, and a covering of an outgoing line in the motor.

According to this configuration, a component for use in the motor is made of a resin other than PI. This configuration therefore restrains acid generation in the motor, and then restrains corrosion of the motor.

The refrigeration cycle apparatus according to a fifth aspect is the refrigeration cycle apparatus according to the fourth aspect, wherein the first resin component includes the insulator of the motor.

According to this configuration, the insulator of the motor is made of a resin other than PI. This configuration therefore restrains acid generation since the insulator which occupies a certain volume is less likely to react with the HFO-based refrigerant.

The refrigeration cycle apparatus according to a sixth aspect is the refrigeration cycle apparatus according to any one of the first to fifth aspects, further including a sliding portion made of at least one of PA (polyamide), PAI (polyamideimide), PPS (polyphenylene sulfide), PEEK (polyether ether ketone), PTFE (polytetrafluoroethylene), and DLC (diamond-like carbon).

According to this configuration, a coating material for the sliding portion is a material other than PI. This configuration therefore restrains acid generation in the sliding portion, and then restrains corrosion of the sliding portion.

The refrigeration cycle apparatus according to a seventh aspect is the refrigeration cycle apparatus according to any one of the first to sixth aspects, wherein the motor further includes a second resin component. The second resin component includes PI (polyimide). A ratio of the second resin component to the refrigerant is less than 1.5% by weight.

According to this configuration, the ratio of the second resin component to the refrigerant is less than 1.5% by weight. This configuration therefore restrains acid generation since the ratio of the second resin component to the refrigerant is small.

The refrigeration cycle apparatus according to an eighth aspect is the refrigeration cycle apparatus according to the seventh aspect, wherein the motor includes an electric wire covered with an insulating covering, an insulating sheet, and a varnish. The second resin component includes at least one of the insulating covering, the insulating sheet, and the varnish.

According to this configuration, the second resin component includes at least one of the insulating covering, the insulating sheet, and the varnish. This configuration therefore suppresses degradation in heat resistance of the motor.

### BRIEF DESCRIPTION OF THE DRAWINGS

FIG. 1 is a schematic diagram of a refrigeration cycle apparatus 1.
FIG. 2 is a sectional view of a compressor 10.
FIG. 3 is another sectional view of the compressor 10.
FIG. 4 is a sectional view of a motor 30.
FIG. 5 is a perspective view of a screw rotor 52 and gate rotors 53.

### DESCRIPTION OF EMBODIMENTS

### (1) General Configuration

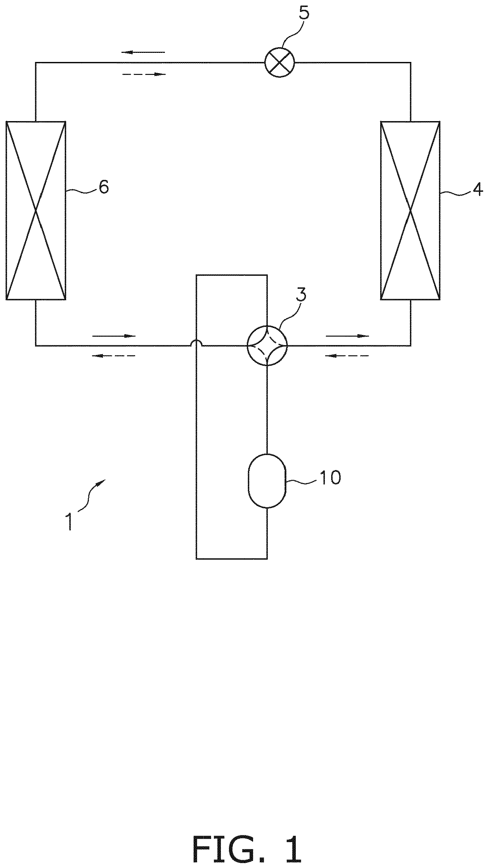

FIG. 1 illustrates a refrigeration cycle apparatus 1 according to an embodiment. The refrigeration cycle apparatus 1 includes a refrigeration cycle circuit and a refrigerant circulating through the refrigeration cycle circuit.

### (1-1) Refrigerant

The refrigerant is an HFO-based refrigerant alone or a mixed refrigerant. In a case where the refrigerant is a mixed refrigerant, a mixing ratio of the HFO-based refrigerant in the mixed refrigerant is equal to or more than 10% by weight, preferably equal to or more than 14% by weight. Examples of the refrigerant to be used herein may include Refrigerants 1 to 75 listed in the following table.

**Table 1**

| | Name | Composition | (Ratio: wt%) |
|---|---|---|---|
| Refrigerant 1 | | R32/R125/R1234yf | (15/25/60) |
| Refrigerant 2 | R513B | R1234yf/R134a | (58.5/41.5) |
| Refrigerant 3 | R1234yf | R1234yf | (100) |
| Refrigerant 4 | R463A | R744/R32/R125/R1234yf/R134a | (6.0/36.0/30.0/14.0/14.0) |
| Refrigerant 5 | R452B | R32/R125/R1234yf | (67/7/26) |
| Refrigerant 6 | | R32/R1234yf | (72.5/27.5) |
| Refrigerant 7 | R454B | R32/R1234yf | (68.9/31.1) |
| Refrigerant 8 | R449A | R32/R125/R1234yf/R134a | (24.3/24.7/25.3/25.7) |
| Refrigerant 9 | R452A | R32/R125/R1234yf | (11.0/59.0/30.0) |
| Refrigerant 10 | R454A | R32/R1234yf | (35/65) |
| Refrigerant 11 | R449C | R32/R125/R1234yf/R134a | (20/20/31/29) |
| Refrigerant 12 | R454C | R32/R1234yf | (21.5/78.5) |
| Refrigerant 13 | R513A | R1234yf/R134a | (56/44) |
| Refrigerant 14 | R1336mzz(Z) | R1336mzz(Z) | (100) |
| Refrigerant 15 | R1336mzz(E) | R1336mzz(E) | (100) |
| Refrigerant 16 | R514A | R1336mzz(Z)/R1130(E) | (74.7/25.3) |
| Refrigerant 17 | | R32/R125/R1234ze(E) | (68/15/17) |
| Refrigerant 18 | R447B | R32/R125/R1234ze(E) | (68/8/24) |
| Refrigerant 19 | R447A | R32/R125/R1234ze(E) | (68/3.5/28.5) |
| Refrigerant 20 | | R32/R1234yf/R1234ze(E) | (73/15/12) |
| Refrigerant 21 | | R32/R1234ze(E) | (72/27) |
| Refrigerant 22 | R446A | R32/R1234ze(E)/Butane | (68/29/3) |
| Refrigerant 23 | R448A | R32/R125/R1234yf/R134a/R1234ze(E) | (26/26/20/21/7) |
| Refrigerant 24 | | R32/R125/R1234yf/R134a/R1234ze(E) | (25/25/9/21/20) |
| Refrigerant 25 | | R32/R125/R1234yf/R134a | (25/25/30/20) |
| Refrigerant 26 | | R32/R1234yf/R152a/R1234ze(E) | (40/20/10/30) |
| Refrigerant 27 | R455A | R744/R32/R1234yf | (3.0/21.5/75.5) |
| Refrigerant 28 | | R32/R125/R134a/R1234yf | (13/13/31/43) |
| Refrigerant 29 | | R32/R125/R1234yf/R134a/R1234ze(E) | (12.5/12.5/13.5/31.5/30) |
| Refrigerant 30 | | R32/R152a/R1234ze(E) | (45/20/35) |
| Refrigerant 31 | R444B | R32/R152a/R1234ze(E) | (41.5/10/48.5) |
| Refrigerant 32 | | R1234yf/R134a/R1234ze(E) | (18/42/40) |
| Refrigerant 33 | R450A | R134a/R1234ze(E) | (42/58) |
| Refrigerant 34 | R515A | R1234ze(E)/R227ea | (88/12) |
| Refrigerant 35 | R515B | R1234ze(E)/R227ea | (91.1/8.9) |
| Refrigerant 36 | R1234ze(E) | R1234ze(E) | (100) |
| Refrigerant 37 | R1233zd(E) | R1233zd(E) | (100) |
| Refrigerant 38 | | R32/R125/CF3I | (49.0/11.5/39.5) |
| Refrigerant 39 | | R32/R1234yf/R134a | (50/40/10) |
| Refrigerant 40 | R459A | R32/R1234yf/R1234ze(E) | (68/26/6) |
| Refrigerant 41 | R452C | R32/R125/R1234yf | (12.5/61/26.5) |
| Refrigerant 42 | R449B | R32/R125/R1234yf/R134a | (25.2/24.3/23.2/27.3) |
| Refrigerant 43 | | R32/R1234yf/R134a | (28/51/21) |
| Refrigerant 44 | | R32/R1234yf/R152a | (35/55/10) |
| Refrigerant 45 | | R32/R1234yf | (29/71) |
| Refrigerant 46 | R465A | R-32/R290/R1234yf | (21.0/7.9/71.1) |
| Refrigerant 47 | R457A | R32/R1234yf/R152a | (18/70/12) |
| Refrigerant 48 | | R32/R125/R1234yf/R134a | (25/30/20/25) |
| Refrigerant 49 | | R32/R125/R1234yf/R134a | |
| Refrigerant 50 | | R32/R1234yf/R134a | (6/31/63) |
| Refrigerant 51 | | R1234yf/R134a/R152a | (82/7/11) |
| Refrigerant 52 | R516A | R1234yf/R134a/R152a | (77.5/8.5/14.0) |
| Refrigerant 53 | | R1123/R32 | (32/68) |
| Refrigerant 54 | | R1123/R32 | (40/60) |
| Refrigerant 55 | | R1123/R32 | (45/55) |
| Refrigerant 56 | | R1123/R32/R1234yf | (19/55/26) |
| Refrigerant 57 | | R1123/R32/R1234yf | (40/44/16) |
| Refrigerant 58 | | R1123 | (100) |
| Refrigerant 59 | R1224yd(Z) | R1224yd(Z) | (100) |
| Refrigerant 60 | | R744/R32/R1234ze(E) | (6/60/34) |
| Refrigerant 61 | | R32/R134a/R1234ze | (76/6/18) |
| Refrigerant 62 | R460A | R32/R125/R134a/R1234ze(E) | (12/52/14/22) |
| Refrigerant 63 | R459B | R32/R1234yf/R1234ze(E) | (21/69/10) |
| Refrigerant 64 | R460B | R32/R125/R134a/R1234ze(E) | (28/25/20/27) |
| Refrigerant 65 | | R744/R32/R1234ze(E) | (7/30/63) |
| Refrigerant 66 | 456A | R32/R134a/R1234ze(E) | (6/45/49) |
| Refrigerant 67 | R445A | R744/R134a/R1234ze(E) | (6.0/9.0/85.0) |
| Refrigerant 68 | R444A | R32/R152a/R1234ze(E) | (12/5/83) |
| Refrigerant 69 | R1132a | R1132a | (100) |
| Refrigerant 70 | | R1132(E)/R1123 | (65/35) |
| Refrigerant 71 | | R1132(E)/R1123/R1234yf | (70/20/10) |
| Refrigerant 72 | | R1132(E)/R1123/R1234yf/R32 | (60/5.7/20/14.3) |
| Refrigerant 73 | | R1132(E)/R1234yf/R32 | (50/35.7/14.3) |
| Refrigerant 74 | | R1132(E)/R1234yf/R32/CO2 | (35.7/47/14.3/3) |
| Refrigerant 75 | | R1132(E)/R1123/R32 | (30/55.7/14.3) |

### (1-2) Refrigeration Cycle Circuit

The refrigeration cycle circuit includes a compressor 10, a four-way switching valve 3, a heat source-side heat exchanger 4, an expansion valve 5, and a usage-side heat exchanger 6. A configuration of the compressor 10 will be described later.

When the four-way switching valve 3 establishes a connection illustrated with solid lines in FIG. 1, the usage-side heat exchanger 6 provides a cool for a user. When the four-way switching valve 3 establishes a connection illustrated with broken lines in FIG. 1, the usage-side heat exchanger 6 provides heat for the user.

The expansion valve 5 has a sliding portion. The sliding portion of the expansion valve 5 is coated with a coating material. The coating material may be, for example, a material other than PI (polyimide). Specific examples of the coating material may include PEEK (polyether ether ketone), PTFE (polytetrafluoroethylene), and DLC (diamond-like carbon).

### (2) Specific Configuration of Compressor 10

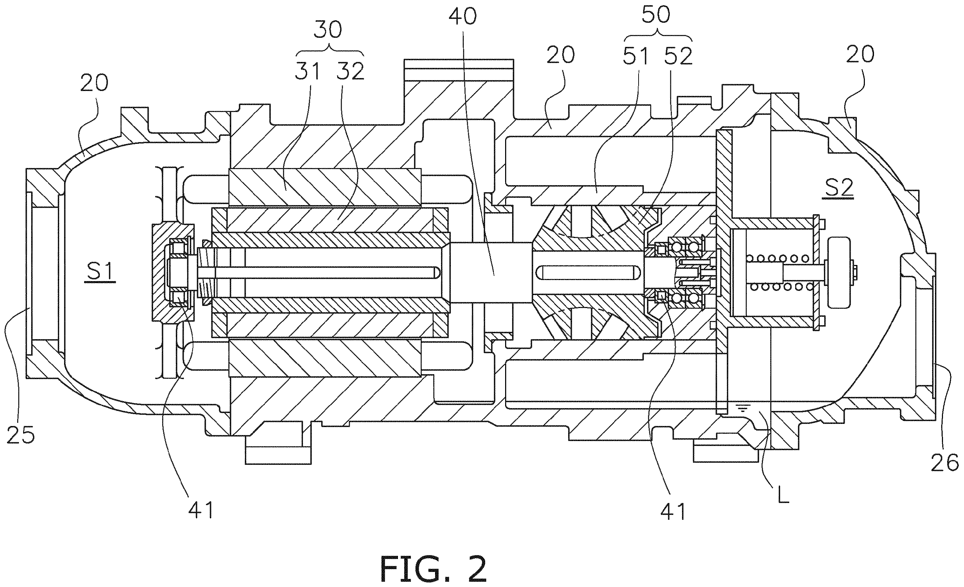

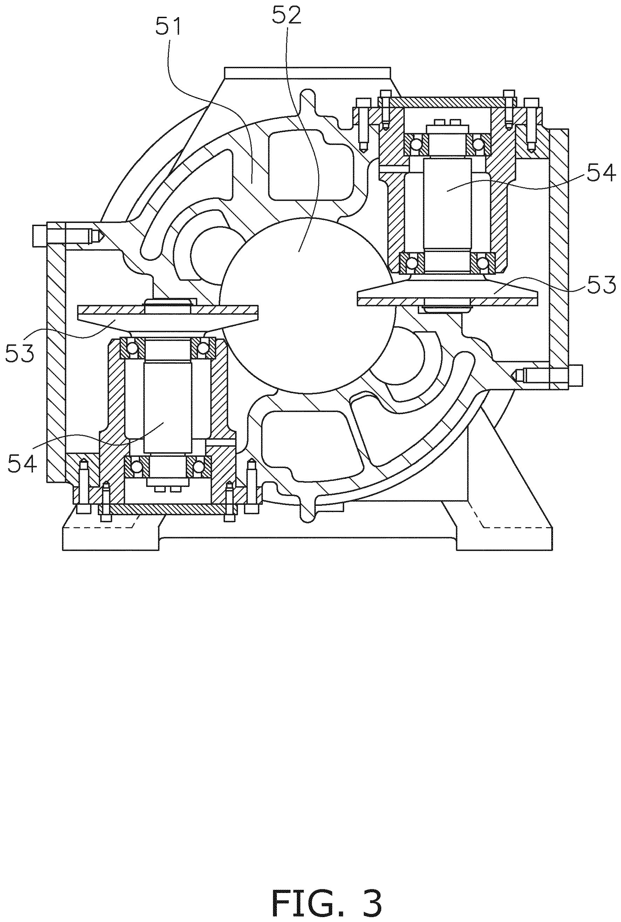

The compressor 10 shown in FIGS. 2 and 3 is a screw type compressor. The compressor 10 includes a casing 20, a motor 30, a shaft 40, and a compression mechanism 50.

### (2-1) Casing 20

The casing 20 is a cylindrical container extending horizontally in the figures. The casing 20 has an internal space divided into a low-pressure space S1 and a high-pressure space S2. A refrigerating machine oil L is retained on a lower side of the high-pressure space S2. The refrigerating machine oil L is fed to sliding portions in the compressor 10 through unillustrated oil feed paths.

A suction port 25 is provided on the side of the low-pressure space S1 of the casing 20. A discharge port 26 is provided on the side of the high-pressure space S2 of the casing 20. The low-pressure gas refrigerant is sucked into the compressor 10 through the suction port 25. The high-pressure gas refrigerant is discharged from the compressor 10 through the discharge port 26.

### (2-2) Motor 30

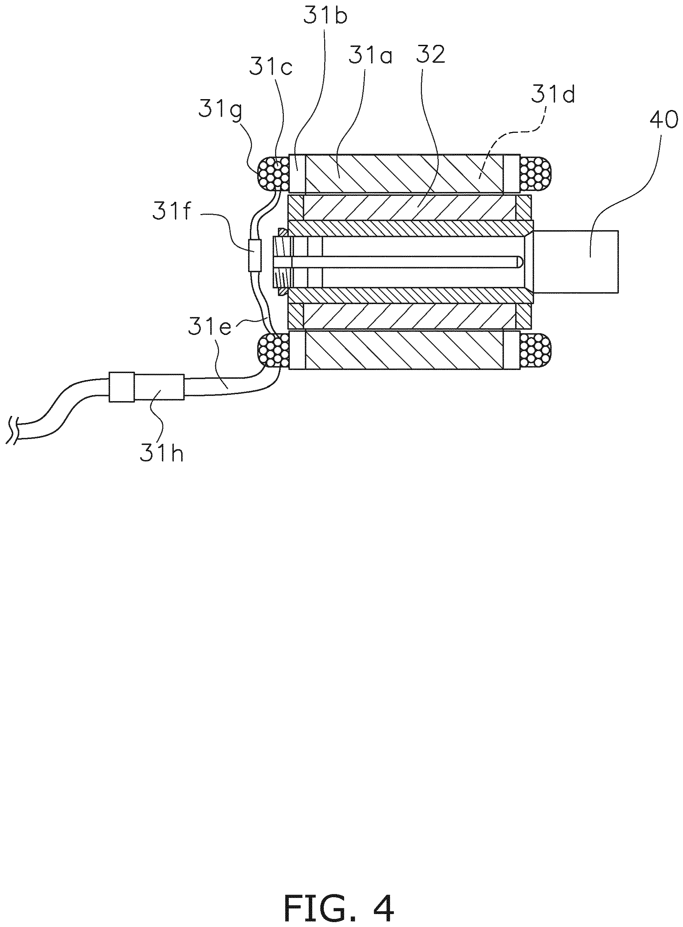

The motor 30 is disposed in the low-pressure space S1. As illustrated in FIG. 4, the motor 30 includes a stator 31 and a rotor 32. The stator 31 is fixed to an inner peripheral face of the casing 20. The rotor 32 is disposed in a cavity of the stator 31, and is fixed to the shaft 40.

The stator 31 includes a stator core 31a, an insulator 31b, coil windings 31c, insulating sheets 31d, insulated electric wires 31e, an insulating sleeve 31f, a binding cord 31g, a cluster block 31h, connection lines, outgoing lines, and a varnish.

The stator core 31a includes a stack of steel plates. The insulator 31b is made of a resin, and is disposed on an end face of the stator core 31a. The coil winding 31c is made of a conductive material, and is wound around the stator core 31a and the insulator 31b. The insulating sheet 31d is made of a resin, and is provided in, for example, a slot between adjacent coil windings 31c. The insulated electric wires 31e is an electric wire covered with an insulating covering. The insulating sleeve 31f is made of a resin, and insulates a joint between the insulated electric wires 31e from the surroundings. The binding cord 31g is made of a resin, and fixes the insulated electric wires 31e to the insulator 31b. The cluster block 31h is a connector housing made of a resin, and detachably connects a plurality of the insulated electric wires 31e. The connection lines are used for supplying external power to the motor 30. The connection lines are covered with a covering. The outgoing lines are lead wires extending from the coil winding 31c. The outgoing lines are covered with a covering. The varnish is used for hardening the coil winding 31c.

The insulator 31b, the insulating sheet 31d, the covering of the insulated electric wire 31e, the insulating sleeve 31f, the binding cord 31g, the cluster block 31h, the covering of the connection line, the covering of the outgoing line, and the varnish are resin components. At least one of the covering of the insulated electric wire 31e, the insulating sheet 31d, and the varnish is made of a material including PI (polyimide). The covering of the insulated electric wire 31e may be made of PI for enhancing the strength. The insulating sheet 31d and the varnish may be made of PI for enhancing heat resistance. The insulator 31b, the insulating sleeve 31f, the binding cord 31g, the cluster block 31h, the covering of the connection line, and the covering of the outgoing line are made of a resin material other than PI. Examples of the resin material other than PI may include PET (polyethylene terephthalate), PA (polyamide), LCP (liquid crystal polymer), PBT (polyethylene terephthalate), phenol resin, melamine resin, PEEK (polyether ether ketone), PTFE (polytetrafluoroethylene), PAI (polyamideimide), PPS (polyphenylene sulfide), and PEN (polyethylene naphthalate).

For example, the insulator 31b includes PA, LCP, or PBT. For example, the insulating sleeve 31f includes PET or PA. For example, the binding cord 31g includes PET. For example, the cluster block 31h includes PBT, phenol resin, or melamine resin.

A ratio of the components each made of a resin material other than PI to the refrigerant is equal to or more than 1.5% by weight.

A ratio of the components each made of a resin material including PI to the refrigerant is less than 1.5% by weight.

### (2-3) Shaft 40

Referring back to FIGS. 2 and 3, the shaft 40 transmits power generated by the motor 30 to the compression mechanism 50. The shaft 40 is fixed to the rotor 32 to rotate together with the rotor 32. The shaft 40 is rotatably supported by a bearing 41. In a case where the bearing 41 is a sliding bearing, the sliding bearing may include a resin material other than PI, such as PA, PTFE, PEEK, PAI, or PPS.

### (2-4) Compression Mechanism 50

The compression mechanism 50 compresses the low-pressure gas refrigerant to generate the high-pressure gas refrigerant. The compression mechanism 50 includes a cylinder 51, a screw rotor 52, gate rotors 53, and gate rotor supporting portions 54.

### (2-4-1) Cylinder 51

The cylinder 51 is formed as a part of the casing 20. The cylinder 51 accommodates therein the screw rotor 52. The cylinder 51 has a gap through which gates 53a, which will be described later, pass.

### (2-4-2) Screw Rotor 52

The screw rotor 52 is a metal member having a substantially columnar shape. The screw rotor 52 is coupled to the shaft 40. The screw rotor 52 is rotatable together with the shaft 40. The screw rotor 52 has an outer diameter that is slightly smaller than the inner diameter of the cylinder 51.

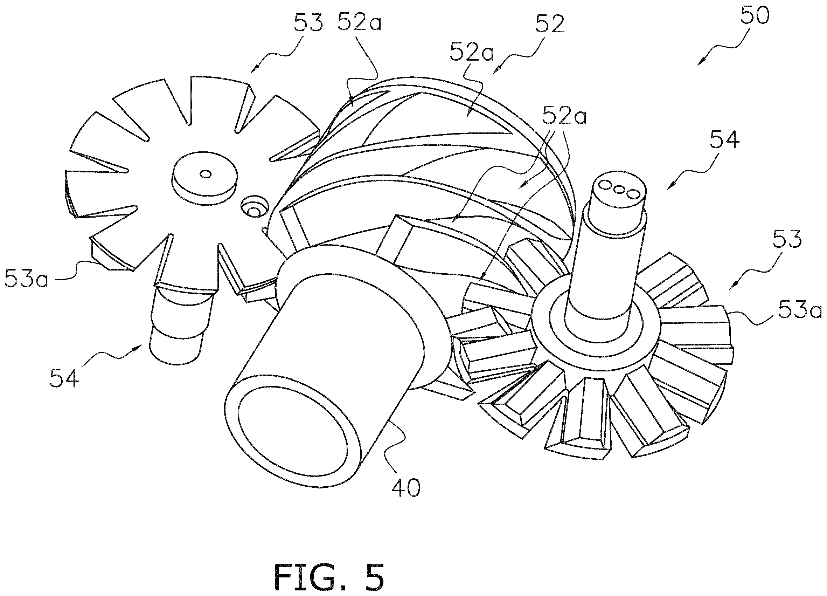

FIG. 5 illustrates the screw rotor 52 and the gate rotors 53. In the figure, the cylinder 51 is omitted. The outer periphery of the screw rotor 52 is provided with a plurality of spiral grooves 52a extending spirally in the direction in which the rotation axis of the screw rotor 52 extends.

### (2-4-3) Gate Rotor 53

Each of the gate rotors 53 has a plurality of gates 53a extending radially. The gate 53a passes through the gap in the cylinder 51 and meshes with the spiral grooves 52a of the screw rotor 52. The screw rotor 52 receives rotational force from the shaft 40 to rotate, and the spiral grooves 52a thus move in accordance with the rotation of the screw rotor 52. The gates 53a move in accordance with the movement of the spiral grooves 52a, and the gate rotors 53 thus rotate in accordance with the movement of the gates 53a.

### (2-4-4) Gate Rotor Supporting Portion 54

Each of the gate rotor supporting portions 54 supports the corresponding gate rotor 53 in a rotatable manner. The two gate rotor supporting portions 54 are arranged symmetrically with each other with respect to the rotational axis of the screw rotor 52.

### (2-5) Others

The screw rotor 52 slides relative to the cylinder 51 and the gate rotors 53. These sliding portions may be coated with a coating material. Examples of the coating material may include PEEK, PTFE, and DLC.

### (3) Compression Operation

With reference to FIG. 2, the low-pressure gas refrigerant is sucked into the low-pressure space S1 through the suction port 25. In the compression mechanism 50, a space defined by the cylinder 51, the spiral grooves 52a, and the gates 53a serves as a compression chamber. When the screw rotor 52 rotates, the compression chamber on the side of the low-pressure space S1 moves toward the side of the high-pressure space S2 while its volume gradually decreases. The low-pressure gas refrigerant is thus compressed into the high-pressure gas refrigerant, which is discharged into the high-pressure space S2. Finally, the high-pressure gas refrigerant is discharged from the compressor 10 through the discharge port 26.

### (4) Refrigerating Machine Oil L

The refrigerating machine oil L is a lubricating oil for avoiding wear and seizure of the sliding portions in the compressor 10. The refrigerating machine oil L mainly includes a base oil, an acid scavenger, an extreme pressure agent, and an antioxidant.

### (4-1) Base Oil

Examples of the base oil may include mineral oils and synthetic oils. The base oil to be appropriately selected herein has favorable compatibility with the refrigerant used in the refrigeration cycle apparatus 1. Examples of the mineral oil may include a naphthene-based mineral oil and a paraffin-based mineral oil. Examples of the synthetic oil may include ester compounds, ether compounds, poly-α-olefin, and alkylbenzene. Specific examples of the synthetic oil may include polyvinyl ether, polyol ester, and polyalkylene glycol. In this embodiment, preferably, the base oil is a synthetic oil such as polyvinyl ether or polyol ester. Alternatively, the base oil may be mixture of at least two kinds of the mineral oils or synthetic oils mentioned above.

### (4-2) Acid Scavenger

The acid scavenger is an additive that reacts with an acid resulting from decomposition of a refrigerant to restrain degradation of the refrigerating machine oil L owing to the acid. Examples of the acid scavenger may include epoxy compounds, carbodiimide compounds, and tenpene-based compounds. Specific examples of the acid scavenger may include 2-ethylhexyl glycidyl ether, phenyl glycidyl ether, epoxidized cyclohexylcarbinol, di(alkylphenyl)carbodiimide, and β-pinene.

### (4-3) Extreme Pressure Agent

The extreme pressure agent is an additive for avoiding wear and seizure of the sliding portions. The refrigerating machine oil L forms an oil membrane between surfaces of the members sliding relative to each other at the sliding portions, thereby preventing the sliding members from contacting each other. In a case where a refrigerating machine oil L with low viscosity, such as a polyvinyl ether, is used and in a case where high pressure is applied to the sliding members, the sliding members are apt to come into contact with each other. The extreme pressure agent forms a coating by reacting with the surfaces of the members sliding relative to each other at the sliding portions, thereby suppressing occurrence of wear and seizure. Examples of the extreme pressure agent may include phosphate ester, phosphite ester, thiophosphate, sulfurated ester, sulfide, and thiobisphenol. Specific examples of the extreme pressure agent may include tricresyl phosphate (TCP), triphenyl phosphate (TPP), triphenyl phosphorothioate (TPPT), amines, C₁₁₋₁₄ side chain alkyl, monohexyl phosphate, and dihexyl phosphate. TCP attaches to a surface of a sliding member and decomposes the sliding member, thereby forming a phosphate coating.

### (4-4) Antioxidant

The antioxidant is an additive for avoiding oxidation of the refrigerating machine oil L. Specific examples of the antioxidant may include zinc dithiophosphate, organic sulfur compound, phenol-based antioxidants such as 2,6-di-tert-butyl-4-methylphenol, 2,6-di-tert-butyl-4-ethylphenol, and 2,2'-methylenebis(4-methyl-6-tert-butylphenol), amine-based antioxidants such as phenyl-α-naphthylamine and N,N'-di-phenyl-p-phenylenediamine, and N ,N'-disalicylidene-1,2-diaminopropane.

### (4-5) Mixing Ratio

The refrigerating machine oil L includes the acid scavenger, for example, as much as 1.0% by weight or more. The acid scavenger thus restrains degradation of the refrigerating machine oil L and corrosion of the expansion valve 5 owing to an acid. The acid scavenger also restrains corrosion of other components of the refrigeration cycle apparatus 1. Therefore, the use of the refrigerating machine oil L according to this embodiment improves the reliability of the refrigeration cycle apparatus 1.

The ratio of the acid scavenger to the refrigerant is equal to or less than 1.6% by weight. This ratio restrains degradation in lubricity of the refrigerating machine oil L.

### (5) Features

### (5-1)

The inventors have found that PI is apt to generate an acid by reacting with HFO-based refrigerant. The insulating components of the motor 30 (i.e. the insulator 31b, the insulating sleeve 31f, the binding cord 31g, the cluster block 31h, the covering of the connection line, and the covering of the outgoing line) are each made of a resin other than PI. These insulating components generate less amount of acid by reacting with the HFO-based refrigerant, compared with the case where these insulating components were made of PI. Therefore, corrosion by an acid of the components in a refrigeration cycle system is restrained.

### (5-2)

The ratio of the insulating components made of a resin other than PI (i.e., the insulator 31b, the insulating sleeve 31f, the binding cord 31g, the cluster block 31h, the covering of the connection line, the covering of the outgoing line) to the refrigerant is equal to or more than 1.5% by weight. This configuration therefore restrains acid generation since the insulating components with a larger amount are less likely to react with the HFO-based refrigerant.

### (5-3)

The ratio of the acid scavenger to the refrigerant is equal to or less than 1.6% by weight. This configuration therefore restrains degradation in lubricity of the refrigerating machine oil L owing to the acid scavenger.

### (5-4)

The components for use in the motor 30 (i.e. the insulator 31b, the insulating sleeve 31f, the binding cord 31g, the cluster block 31h, the covering of the connection line, and the covering of the outgoing line) are made of a resin other than PI. This configuration therefore restrains acid generation in the motor 30, and then restrains corrosion of the motor 30.

### (5-5)

The insulator 31b of the motor 30 is made of a resin other than PI. This configuration therefore restrains acid generation since the insulator 31b which occupies a certain volume is less likely to react with the HFO-based refrigerant.

### (5-6)

A material other than PI is used at the sliding portions, such as the coating material for the expansion valve 5 or the sliding bearing of the shaft 40. This configuration therefore restrains acid generation in the sliding portions, and then restrains corrosion of the sliding portions.

### (5-7)

A part of the motor 30 is made of a resin including PI, and the ratio of the resin including PI to the refrigerant is less than 1.5% by weight. This configuration therefore restrains acid generation since the ratio of the components including PI to the refrigerant is small.

### (5-8)

At least one of the insulating covering, the insulating sheet 31d, and the varnish includes PI. This configuration therefore suppresses degradation in heat resistance of the motor 30.

### (6) Modifications

### (6-1) First Modification

In the foregoing embodiment, at least one of the covering of the insulated electric wire 31e, the insulating sheet 31d, and the varnish includes PI. Alternatively, the covering of the insulated electric wire 31e, the insulating sheet 31d, and the varnish may not include PI. For example, the covering of the insulated electric wire 31e, the insulating sheet 31d, and the varnish may be made of a resin other than PI.

With this configuration, the refrigeration cycle apparatus 1 is less likely to generate an acid.

### (6-2) Second Modification

In the foregoing embodiment, the compressor 10 is of a screw-type compressor. Alternatively, the compressor may be of another type such as a scroll-type compressor or a rotary-type compressor.

### <Closing>

The foregoing description concerns embodiments of the disclosure. It will be understood that numerous modifications and variations may be made without departing from the gist and scope of the disclosure in the appended claims.

### REFERENCE SIGNS LIST

1: refrigeration cycle apparatus
5: expansion valve
10: compressor
30: motor
31: stator
31a: stator core
31b: insulator
31c: coil winding
31d: insulating sheet
31e: insulated electric wire
31f: insulating sleeve
31g: binding cord
31h: cluster block
32: rotor
40: shaft
50: compression mechanism
L: refrigerating machine oil

### CITATION LIST

### PATENT LITERATURE

Patent Literature 1: Japanese Patent No. 4,932,793

## Claims

1. A refrigeration cycle apparatus (1) comprising:
a refrigerant; and
a refrigeration cycle circuit including a compressor (10), the refrigeration cycle circuit being configured to cause the refrigerant to circulate therethrough,
wherein
the refrigerant is an HFO-based refrigerant alone or a mixed refrigerant in which a mixing ratio of an HFO-based refrigerant is equal to or more than 10% by weight,
the compressor includes a motor (30),
the motor includes a first resin component (31b, 31f, 31g, 31h), and
the first resin component is made of at least one of
PET (polyethylene terephthalate),
PA (polyamide),
LCP (liquid crystal polymer),
PBT (polyethylene terephthalate),
phenol resin,
melamine resin,
PEEK (polyether ether ketone),
PTFE (polytetrafluoroethylene),
PAI (polyamideimide),
PPS (polyphenylene sulfide), and
PEN (polyethylene naphthalate).

2. The refrigeration cycle apparatus according to claim 1, wherein
a ratio of the first resin component to the refrigerant is equal to or more than 1.5% by weight.

3. The refrigeration cycle apparatus according to claim 1 or 2, further comprising:
a refrigerating machine oil (L) retained in the compressor; and
an acid scavenger added to the refrigerating machine oil,
wherein
a ratio of the acid scavenger to the refrigerant is equal to or less than 1.6% by weight.

4. The refrigeration cycle apparatus according to any one of claims 1 to 3, wherein
the first resin component is at least one selected from an insulator (31b), an insulating sleeve (31f), a binding cord (31g), a cluster block (31h), a covering of a connection line, and a covering of an outgoing line in the motor.

5. The refrigeration cycle apparatus according to claim 4, wherein
the first resin component includes the insulator (31b) of the motor.

6. The refrigeration cycle apparatus according to any one of claims 1 to 5, further comprising:
a sliding portion including at least one of
PA (polyamide),
PAI (polyamideimide),
PPS (polyphenylene sulfide),
PEEK (polyether ether keton),
PTFE (polytetrafluoroethylene),and
DLC (diamond-like carbon).

7. The refrigeration cycle apparatus according to any one of claims 1 to 6, wherein
the motor further includes a second resin component,
the second resin component includes PI (polyimide), and
a ratio of the second resin component to the refrigerant is less than 1.5% by weight.

8. The refrigeration cycle apparatus according to claim 7, wherein
the motor includes an electric wire covered with an insulating covering, an insulating sheet, and a varnish, and
the second resin component includes at least one of the insulating covering, the insulating sheet, and the varnish.
